# EUROPEAN PATENT APPLICATION

(11) **EP 1 905 960 A2**
(43) Date of publication of application: **02.04.2008**
(21) Application number: 07018868.5
(22) Date of filing: 25.09.2007
(51) Int. Cl.: F01D 25/18, F02C 6/12, F02B 39/14, F02B 39/16, F16C 35/077

(54) **Supercharger**

(30) Priority: 28.09.2006 JP 2006265762
(71) Applicant: JTEKT Corporation, Osaka-shi Osaka 542-8502 (JP)
(72) Inventor: Ueno, Hiroshi, Osaka-shi Osaka 542-8502 (JP); Shiraki, Toshihiko, Osaka-shi Osaka 542-8502 (JP); Oshima, Akio, Osaka-shi Osaka 542-8502 (JP); Nakashita, Tomonori, Osaka-shi Osaka 542-8502 (JP); Ohtsuki, Masaaki, Osaka-shi Osaka 542-8502 (JP); Bando, Shigenori, Osaka-shi Osaka 542-8502 (JP); Abe, Masaki, Osaka-shi Osaka 542-8502 (JP); Nakata, Ryuji, Osaka-shi Osaka 542-8502 (JP); Kida, Takehisa, Osaka-shi Osaka 542-8502 (JP)
(74) Representative: Hager, Thomas Johannes

(57) **Abstract**

A turbine shaft (41) to which a turbine (42) is fixed is supported by a bearing supporting member (61) via bearings (10a,10b) so as to rotate freely. The bearing supporting member (61) is supported by a housing (40) via the damper member (60). The damper member (60) is formed by knitting a wire made of metal.

## Description

### BACKGROUND OF THE INVENTION

The present invention relates to a supercharger.

In an automobile, a supercharger has been widely used since it can further improve the efficiency of an engine. The supercharger includes a housing and a turbine shaft which is supported via bearings within the housing. A turbine wheel is fixed at the one end of the turbine shaft and a compressor wheel is fixed to the other end thereof.

The turbine shaft rotates at a high speed and so vibration occurs in accordance with the rotation thereof. Thus, a damper means is indispensable for the supporting portion of the turbine shaft in order to reduced the vibration. As a damper means of a related art, as disclosed in JP-A-4-72424 and JP-A-2001-303964, there is one which is configured in a manner that bearings for supporting a turbine shaft are attached to the inner peripheral surface of the a cylindrical oil film damper, engine oil is supplied between the outer peripheral surface of the oil film damper and the inner peripheral surface of a housing to form an oil film, and the oil film absorbs vibration.

The damper means of each in JP-A-4-72424 and JP-A-2001-303964 utilizes an oil pump for an engine in order to supply the engine oil to the oil film damper. Thus, energy loss of the engine becomes large and so the efficiency degrades.

Further, an oil path is required to be formed at the housing of the supercharger in order to supply the engine oil. Furthermore, since the engine oil contains contaminating material such as carbon sludge, the oil path is required to be provided with a contaminating material removing means such as a filter in order to remove the contaminating material. Thus, the configuration of the housing etc. becomes complicated and the manufacturing cost increases.
Further, since the engine oil degrades gradually in accordance with the use thereof, there arises a problem that the efficiency of the oil film damper also degrades due to the degradation of the engine oil.

According to the technique in JP-A-4-72424, the engine oil supplied to the oil film damper via the oil path is also supplied to the bearings of the turbine shaft to lubricate the bearings. Thus, the contaminating material contained in the engine oil may be supplied to the bearings to badly influence on the durability of the bearings. In order to solve such a problem, it is considered to stop the supply of the engine oil to the housing and to lubricate the bearings with lubricant dedicated for the bearings. In this case, the housing does not require the oil path for the engine oil and so the oil film damper itself can not be used. Thus, an alternative means is required.

### SUMMARY OF THE INVENTION

The invention has been made in view of the aforesaid circumstances, and an object of the invention is to provide a supercharger which can suitably reduce the vibration of a turbine shaft without using engine oil.

A supercharger according to the invention comprises:
a turbine shaft to which a turbine is fixed;
a housing that houses the turbine shaft;
a bearing that rotatably supports the turbine shaft; and
a damper member that is formed by knitting a wire made of metal and disposed between the bearing and the housing for supporting the bearing.
According to this configuration, since the damper member is formed by knitting the metal wire, the damper member can elastically deform (shrink) entirely, and so the vibration can be attenuated in a three dimensional and omnidirectional manner and a high damping efficiency can be attained. Further since the damper member is formed by the metal wire, heat resisting properties canbe improved, and so the damper member is suitable for a damper member of a supercharger which temperature becomes quite high. Further, by using such the damper member, the oil film damper is not required to be used unlike the related art and so various problems caused by supplying the engine oil to the oil film damper can be eliminated.

Preferably, gaps are formed among the wires and lubricant is filled into the gaps. Thus, the abrasion of the wires due to the mutual rubbing of the wires caused by the elastic deformation of the damper member can be prevented.

Preferably, the housing has a tank portion for reserving lubricant for the bearing and a supply means for supplying the lubricant within the tank portion to the bearing.
According to this configuration, it becomes not necessary to supply the engine oil for lubricating the bearings as well as for the damper of the turbine shaft, whereby the housing can be simplified in its configuration and reduced in its cost.
In other words, even if an oil path for the engine oil for lubricating the bearings is not formed at the housing, the vibration of the turbine shaft can be reduced by using the damper member according to the invention.

According to the invention, the vibration of the turbine shaft can be reduced suitably without using the engine oil.

### BRIEF DESCRIPTION OF THE DRAWINGS

Fig. 1 shows a sectional diagram showing an embodiment of a supercharger according to the invention.
Fig. 2 shows a sectional diagram along a long II-II in Fig. 1.
Fig. 3 shows a perspective view of a damper member.
Fig. 4 shows an enlarged diagram of 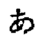 IV portion in Fig. 3.
Figs. 5A to 5C show graphs showing the results of the efficiency tests of a supercharger having the damper member, in which Fig. 5A shows the relation between the time and the rotation speed of a turbine shaft and Figs. 5B and 5C show the relation between the time and the vibration values.
Figs. 6A and 6B show graphs showing the results of the efficiency tests of the supercharger having the damper member, in which Fig. 6A represents the relation between the time and the rotation speed of a turbine shaft and Fig. 6B represents the relation between the time and the vibration values.
Figs. 7A and 7B show graphs showing the results of efficiency tests of a supercharger according to a comparative example, in which Fig. 7A shows the relation between the time and the rotation speed of a turbine shaft and Fig. 7B shows the relation between the time and the vibration values.
Figs. 8A and 8B show graphs showing the results of efficiency tests of a supercharger according to the comparative example, in which Fig. 8A shows the relation between the time and the rotation speed of a turbine shaft and Fig. 8B shows the relation between the time and the vibration values.

### DESCRIPTION OF PREFERRED EMBODIMENTS

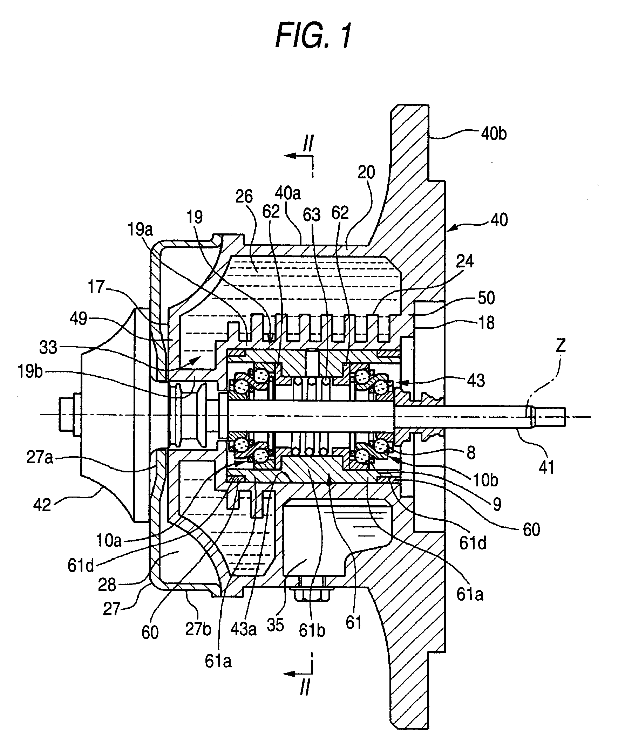

Fig. 1 is a sectional diagram showing an embodiment of a supercharger according to the invention. The supercharger includes a housing 40 and a turbine shaft 41 supported by the housing 40 via rolling bearings 10a, 10b within the housing 40. The both end portions of the turbine shaft 41 in the axial direction thereof protrude from the housing 40. A turbine 42 is provided at the one end portion of the turbine shaft 41 and a not-shown compressor is provided at the other end portion thereof. The supercharger is arranged for the engine of an automobile. A pair of the rolling bearings 10a and a pair of the rolling bearings 10b are provided at separately along a shaft center Z direction in a bearing supporting member 61 disposed inside the housing.

The housing 40 includes a main body portion 40a having an outer periphery of a cylindrical shape and a flange portion 40b extending outward in the radial direction from the outer peripheral portion of the end portion 50 of the main body portion 40a. The main body portion 40a has a center hole 43 at the radially center portion thereof. The center hole 43 is formed as a circular hole around the shaft center Z. A pair of the rolling bearings 10a, 10b are provided in the center hole 43 via a bearing supporting member 61. The turbine shaft 41 is supported so as to be rotatable around the shaft line Z by these rolling bearings 10a, 10b. A damper member (damper means) 60 according to the invention is disposed between the bearing supporting member 61 and the surface 43a of the hole 43. The damper member 60 will be described later.

The main body portion 40a of the housing 40 has a cooling water jacket 26 therein. The cooling water jacket 26 is provided within the main body portion 40a so as to extend from the one end portion 49 in the axial direction to the other end portion 50. To be concrete, the cooling water jacket 26 is configured in a range from the inner surface of a side wall 17 on the one end portion 49 side of the main body portion 40a to the inner surface of a side wall 18 on the other end portion 50 side, in the shaft center Z direction. The size of the jacket in the shaft center Z direction is made larger than the center hole 43. In this manner, the cooling water jacket 26 exists so as to extend to the axially outside positions of the pair of the rolling bearings 10a, 10b.

The cooling water jacket 26 has, in the peripheral direction of the main body portion 40a, an annular portion continuous in the peripheral direction at the radially outward position of the one rolling bearings 10a on the turbine 42 side and at a position on the turbine 42 side. A tank portion 35 reserving lubricant to be supplied to the rolling bearings 10a, 10b is formed at a portion of the radially outward position of the other rolling bearings 10b, that is, at the inner portion of the lower portion on the other end portion 50 side of the main body portion 40a.
In this manner, the cooling water jacket 26 is configured to surround the axial and peripheral directions of the center hole 43 except for a part where the potion 35 exists.

Further, the cooling water jacket 26 is formed as a space portion surrounded by the annular side wall 17 on the one end portion 49 side of the main body portion 40a, a part of the annular side wall 18 on the other end portion 50 side, an inside peripheral wall 19 forming the center hole 43 and an outside peripheral wall 20 at the outer periphery of the main body portion 40a. Coolant for cooling exists within the space portion, whereby the rolling bearings 10a and 10b can be cooled. A plurality of fins 24 protruding in the radially outward direction are formed at the inside peripheral wall 19 thereby to improve the cooling function for the rolling bearings 10a, 10b, The inside peripheral wall 19 has a large-diameter cylindrical portion 19a forming the outer peripheral surface of the center hole 43 and a small-diameter cylindrical portion 19b which continues axially from the large-diameter cylindrical portion 19a to the one end portion 49 side via a step portion and has a diameter smaller than that of the large-diameter cylindrical portion 19a.

Further, the cooling water jacket 26 has a portion exiting between the turbine 42 and the rolling bearings 10a within the main body portion 40a. To be concrete, on the one end portion 49 side of the main body portion 40a, the cooling water jacket 26 has a portion protruding radially inward from the inner peripheral surface 43a of the center hole 43. This portion is formed as an annular portion 33. The annular portion 33 has an inner peripheral surface formed by the small-diameter cylindrical portion 19b and a die wall formed by the inner peripheral side portion of the side wall 17. According to this configuration, since the annular portion 33 exists between the turbine 42 and the rolling bearings 10a in the axial direction, heat can be effectively removed from the turbine 42 side by the coolant of the annular portion 33, whereby the temperature at the rolling bearings 10a near the turbine 42 can be suppressed from increasing, particularly.

Further, the supercharger includes a heat shielding member 27 provided between the turbine 42 and the housing 40. The heat shielding member 27 is made of ceramics ormetal, and has an annular portion 27a existing between the side wall 17 and the turbine 42 and a cylindrical portion 27b extending from the annular portion 27a to the hosing 40 side. The base end portion (turbine shaft 41) is inserted into the center hole of the annular portion 27a, and a small gap is formed between this hole and the base end portion of the turbine 42. The end portion of the cylindrical portion 27b contacts with the outer peripheral portion of the main body portion 40a of the housing 40. Thus, an annular air chamber 28 is formed between the side wall 17 of the housing 40 and the annular portion 27a, the cylindrical portion 27b of the heat shielding member 27. According to this configuration, radiant heat and air-conduction heat from the turbine 42 side is shielded by the heat shielding member 27, whereby the temperature increase of the housing 40 and the rolling bearings 10a, 10b due to such heat can be suppressed. Further, since the heat from the turbine 42 side becomes more hardly transmitted to the housing 40, the temperature increase of the housing 40 and the rolling bearings 10a, 10b can be suppressed.

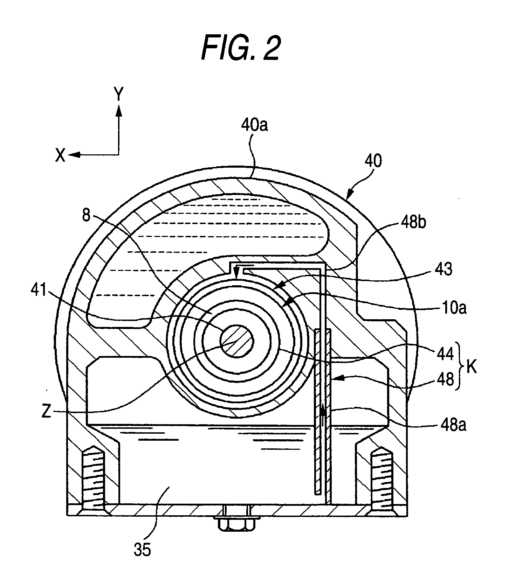

The supercharger has a lubricating structure where the lubricant for the rolling bearings 10a, 10b exists only within the housing 40.
To be explained concretely, the lubricating structure may be configured to seal the lubricant within the center hole 43 of the main body portion 40a or to fill the lubricant (grease) at the rolling bearings 10a, 10b portions at the center hole 43.
However, the lubricating structure shown in Figs. 1 and 2 has the tank portion 35 formed within the housing 40 for reserving the lubricant therein and a supply means K for supplying the lubricant to the center hole 43 from the tank portion 35. The supply means K is also provided within the housing 40. Fig.2 is a sectional diagram along a line II-II in Fig. 1.

The tank portion 35 is configured by a space portion formed by a part of the lower portion within the main body portion 40a. The lubricant of the tank portion 35 is supplied to the center hole 43 by the supplymeans K and is used for lubricating the rolling bearings 10a, 10b at the center hole 43. A flow path (not shown) for returning the lubricant used for lubrication and excessive lubricant to the tank portion 35 from the center hole 43 is formed at the main body portion 40a.

In Fig. 2, the supply means K has a flow path 48 communicating with the center hole 43 from the tank portion 35 and a mechanism for supplying the lubricant within the tank portion 35 to the center hole 43 side via the flow path 48. The flow path 48 is formed by a pipe member 48a which extends from the bottom portion of the tank portion 35 to the inside of the main body portion 40a and a hole 48b which is formed within the main body portion 40a so as to communicate with the pipe member 48a.

A blade member 44 provided at the rolling bearings 10a, 10b and the turbine shaft 41 can supply the lubricant to the hole 34 via the flow path 48. For example, the blade member 44 is provided at the rotary portions of the rolling bearings 10a, 10b. To be concrete, the blade member is formed at cages 8, 9 for holding balls as rolling elements of the rolling bearings 10a, 10b. Thus, when the turbine shaft 41 rotates, the cages 8 and 9 rotate together with the rolling elements, and the blade member 44 rotates around the shaft line Z. The rotating blade member 44 generates an air flow within the center hole 43, whereby the center hole 43 can be made a negative pressure with respect to the tank portion 35. As a result, the lubricant can be soaked up via the flow path 48 from the tank portion 35 and flow automatically to the center hole 43.

Further, the supercharger has a wick member (not shown) provided between the tank portion 35 and the center hole 43 as the supply means K for supplying the lubricant to the center hole 43 from the tank portion 35. The wick member is configured by material and structure for permeating the lubricant, and has one end dipped into the lubricant within the tank portion 35 and the other end provided at the rolling bearing 10 of within the center hole 43. Thus, the lubricant within the tank portion 35 is supplied within the center hole 43 by the capillary action (capillarity) of the wick member. According to the wick member, the lubricant can be supplied to the rolling bearing 10 of the center hole 43 even if the turbine shaft 41 is in a stopped state.
The wick member may provided together with the blade member 44 and the flow path 48 or may be provided with one of them.

The supercharger configured in the aforesaid manner is not constructed so as to obtain the lubricant for the rolling bearings 10a and 10b from the outside of the supercharger like the related art (JP-A-4-72424) but constructed so as to circulate the lubricant for the rolling bearings 10a and 10b only within the hosing 40. Thus, the lubricant is prevented from being polluted by the contaminatingmaterial such as carbon sludge generated in the engine. As a result, a good lubricating state can be kept for a long time at the rolling bearings 10a and 10b.

Further, the main body portion 40a of the housing 40 does not require an oil path for receiving the lubricant supplied from the outside. Thus, as shown in Fig. 1, the cooling water jacket 26 can be provided in a wide area from the one end portion 49 to the other end portion 50 within the main body portion 40a of the housing 40.

Furthermore, an input port and an output port (not shown) for the coolant are formed at the main body portion 40a and the coolant circulates via the cooling water jacket 26, whereby the cooling action can be enhanced by the cooling water jacket 26 and so the rolling bearings 10a and 10b can be cooled in a wide range of the housing 40 along the axial direction. Thus, the temperature of the rolling bearings 10a, 10b can be suppressed to a low value.
In this manner, since the lubricating structure for the rolling bearings 10a, 10b and the large-sized cooling water jacket 26 for cooling the rolling bearings 10a, 10b can be housed within the housing 40, the simplification and miniaturization of the structure can be realized.

The structure of the cooling water jacket 26 is not limited to the aforesaid one and may be changed suitably. For example, the fins 24 may be eliminated or the space within the cooling water jacket 26 may be formed in a spiral shape around the shaft center Z. Further, the shape and size of the tankportion 35 can be suitably changed in accordance with the size and the shape of the cooling water jacket 26. Further, the supply means K may also be changed suitably so long as it is configured to supply the lubricant to the rolling bearings 10a, 10b from the tank portion 35 and return the lubricant to the tank portion 35 after the lubrication.

As shown in Fig. 1, the rolling bearings 10a, 10b are attached around the bearing supporting member 61 disposed within the center hole 43. The bearing supportingmember 61 is formed in a cylindrical shape and fit coaxially into the center hole 43. The length of the bearing supporting member 61 in the shaft center Z direction is almost same as the length of the center hole 43 in the shaft center Z direction thereof. The outer diameter of the bearing supporting member 61 is formed to be slightly smaller than the inner diameter of the center hole 43. Each of the both end portions of the bearing supporting member 61 in the shaft center Z direction is formed as a large inner diameter portion 61a which inner diameter is set to be large, and the center portion thereof in the shaft center Z direction is formed as a small inner diameter portion 61b which inner diameter is set to be smaller than that of the large inner diameter portion 61a. The rolling bearings 10a, 10b are pressed into the large inner diameter portion 61a.

A pair of ring-shaped spring receivers 62, 62 are provided at a step portion between the large inner diameter portion 61a and the small inner diameter portion 61b, and a coil spring (elastic member) 63 is provided between the spring receivers 62, 62. The coil spring 63 holds the axial-direction position of the rolling bearings 10a, 10b.

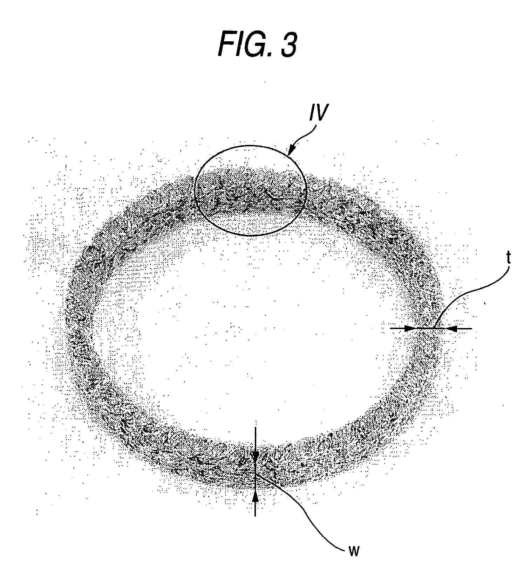

The damper member 60 for reducing the vibration generated in accordance with the rotation of the turbine shaft 41 is provided at each of the outer peripheral surfaces of the both ends of the bearing supporting member 61. Fig. 3 is a perspective view of the damper member 60. The damper member 60 is formed in a ring shape and also in an almost quadrangle shape in its section having a width w and a thickness t. The damper member 60 is fit into a concave portion 61d formed at each of the outer peripheral surfaces of the bearing supporting member 61. The outer peripheral surface of the damper member 60 abuts against the inner peripheral surface 43a of the center hole 43.

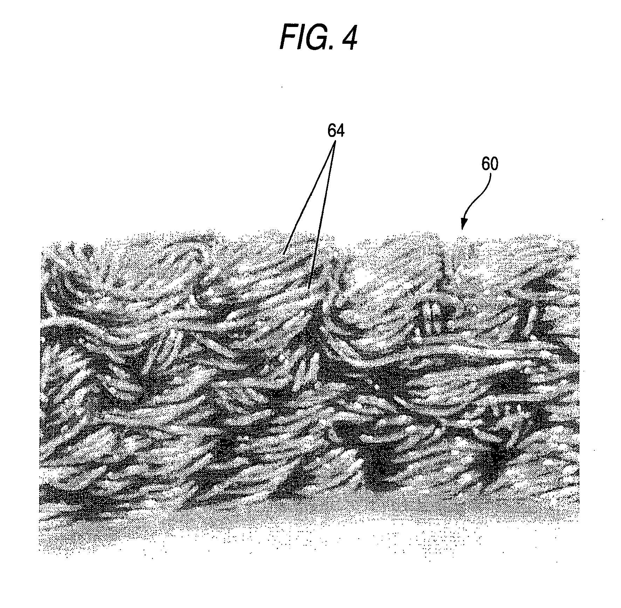

Fig. 4 is an enlarged diagram of a IV portion in Fig. 3. The dampermember 60 is formed by a wire 64 made of metal such as stainless steel. To be concrete, a single or a plurality of metal wires 64 is knitted in a three-dimensional manner while bending the wire complicatedly (colleting, twirling, mixing and/or interwining the wire 64) thereby to form the damper member as a whole in the ring shape with the almost quadrangle shape in its section.

Gaps (air holes) are formed entirely or partially among the metal wires 64 constituting the damper member 60. Since the wires 64 elastically deform in the range of the gaps and the adjacent wires deviate positionally in the longitudinal direction, the damper member 60 can elastically deform (shrink) entirely in the radial direction (X direction, Y direction etc. in Fig. 2) and in the shaft center Z direction. The damper member 60 is formed to have an outer diameter slightly larger that the inner diameter of the center hole 43 and is attachedbetween the bearing supporting member 61 and the center hole 43 in a state of being compressed radially with a predetermined interference.

The lubricant is filled in the gaps among the wires 64 within the damper member 60. For example, fluorochemical grease may be used as the lubricant. A wire with an outer diameter of 0.4 mm, for example, may be used as the metal wire 64. The ratio of the gaps (porosity) with respect to the entire volume of the damper member 60 may be 60 %, for example.

The damper member 60 is manufactured in the following manner. First, a ring-shaped intermediate product is formed which has an outer diameter, a thickness t and a width w each slightly larger than a final product but has an inner diameter smaller than that. The intermediate product is formed by gently knitting the metal wire 64 so that theporositythereof is larger than that (for example, 60%) of the final product. The intermediate product is thenpressed by using a mold to reduce the size of the gap between the wires 64 thereby to form the final product having desired sizes and porosity.

According to this configuration, the vibration transmitted to the bearing supporting member 61 via the rolling bearings 10a, 10b from the turbine shaft 41 is attenuated by the damper member 60 and then transmitted to the housing 40. In this case, since thedampermember 60 can deform elastically in the radial directions (X and Y directions) and the shaft center Z direction, the vibration can be attenuated in a three dimensional and omnidirectional manner and so a high damping efficiency can be attained. Further, due to not only the elastic deformation of the metal wire 64 itself but also the friction caused by the knit structure of the wire 64 and the intertwined state etc. of the wire 64, the omnidirectional vibration energy can be received with an efficiency exceeding the simple viscoelasticity and so reduced.

Since the damper member 60 is formed by using the metal wire 64, the damper member can have excellent heat resisting properties.
Thus, this damper member is suitable as a damper member for a supercharger which temperature becomes quite high.
Further, since the grease is filled in the gaps of the wires 64 within the damper member 60, the wire 64 is scarcely worn away even by the mutual rubbing caused by the elastic deformation of the wire.

Further, when the damper member 60 thus configured is provided between the bearing supporting member 61 and the housing 40, the oil film damper is not required unlike the related art. Thus, it is not necessary to supply the engine oil within the housing and also not necessary to use an oil pump. As a result, the efficiency of the engine canbe improved as compared with the related art. Further, since the engine oil is not used for damping the vibration of the turbine shaft 41, the damping efficiency can be kept for a long time without being influenced by the efficiency of the engine oil. Further, a consumption amount of the engine oil can be reduced.

Unlike the related art, since the housing 40 is not required to provide the oil path for supplying the engine oil in the oil film damper, the housing 40 can be simplified in its configuration and reduced in its cost. Further, as described above, as the lubricant for the rolling bearings 10a and 10b, the engine oil is not used but the lubricant within the tank portion 35 provided within the housing 40 is used. The housing 40 is not required to be provided with an engine oil path for the lubrication of the bearings or for the damper. Thus, the housing 40 can be further simplified in its configuration and further reduced in its cost.

In other words, even for a supercharger having the housing 40 not provided with an oil path for the engine oil for lubricating the rolling bearings 10a, 10b, the vibration of the turbine shaft 41 can be suitably reduced by using the aforesaid damper member 60 formed by the metal wire 64.

The degree of elasticity (spring constant) of the dampermember 60 can be changed freely by suitably selecting the porosity, the knitting direction and the outer diameter of the wire 64 etc. Further, the elasticity can be differentiated in accordance with the direction (radial direction, axial direction) of the elastic deformation. Thus, the damper member 60 can be manufactured easily in accordance with the required damping properties. Further, since the shape (outer diameter size, inner diameter size, width w, thickness t, sectional shape etc.) of the damper member 60 can be designed freely, the degree of freedom of the design of the supercharger enhanced and so an optimum supercharger can be manufactured.

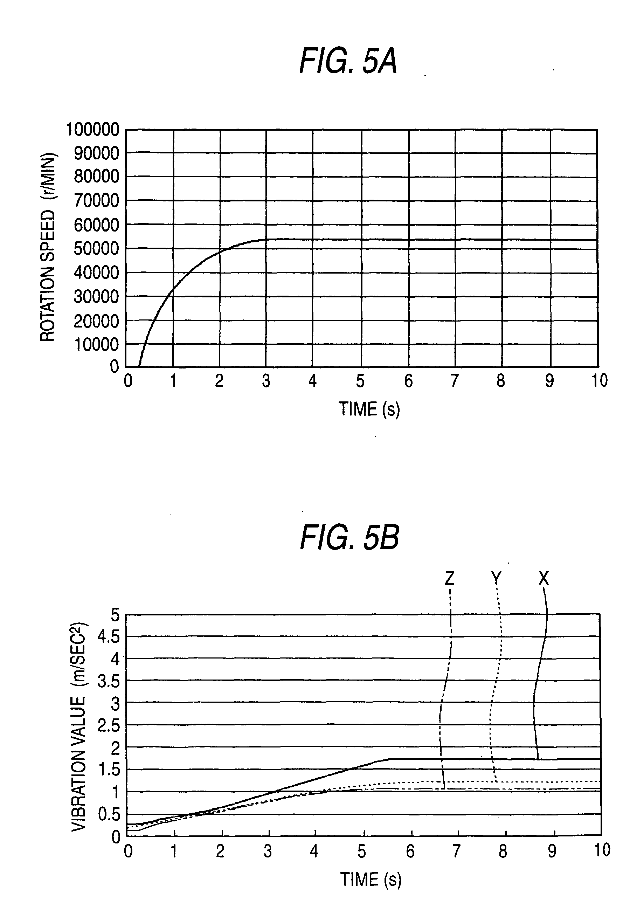

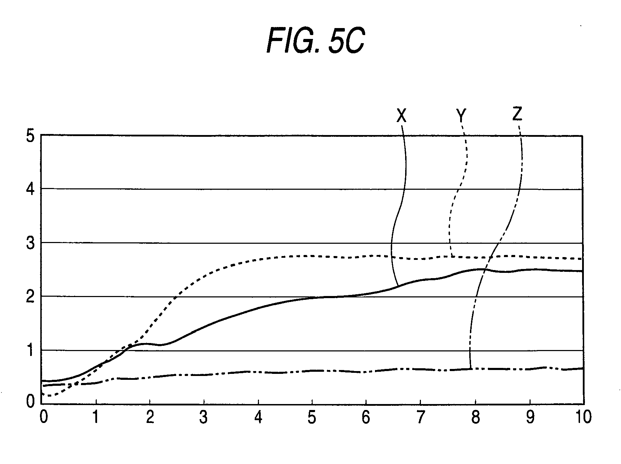

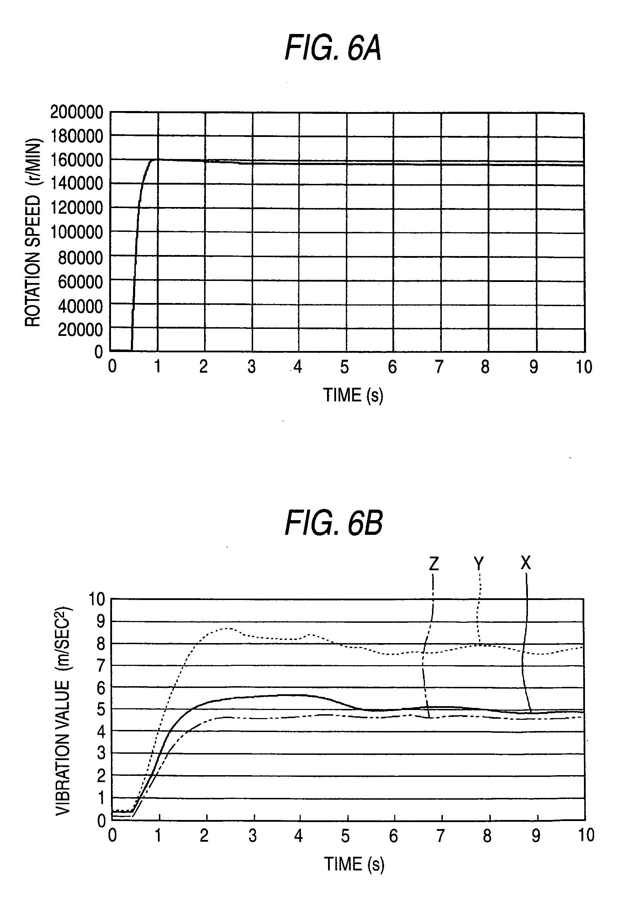

Hereinafter, the efficiency test results of the supercharger using the damper member 60 will be shown as a reference.
The tests were made as to the supercharger using the damper member 60 in a manner that air is supplied to the turbine 42 to rotate the turbine shaft 41 and the vibration values of the housing 40 generated with the rotation were measured. Figs. 5A to 6B are diagrams showing the measured results thereof. Fig. 5A shows the change of the rotation speed in accordance with the time lapse and Figs. 5B and 5C show the change of the vibration values in the X, Y and Z directions of the housing 40 when the turbine shaft 41 is rotatedat a rotation speed less thana dangerous speed (100.000 rpm) . Fig. 6A shows the change of the rotation speed in accordance with the time lapse and Fig. 6b shows the change of the vibration values in the X, Y and Z directions of the housing 40 when the rotation speed of the turbine shaft 41 is increased to the dangerous speed.

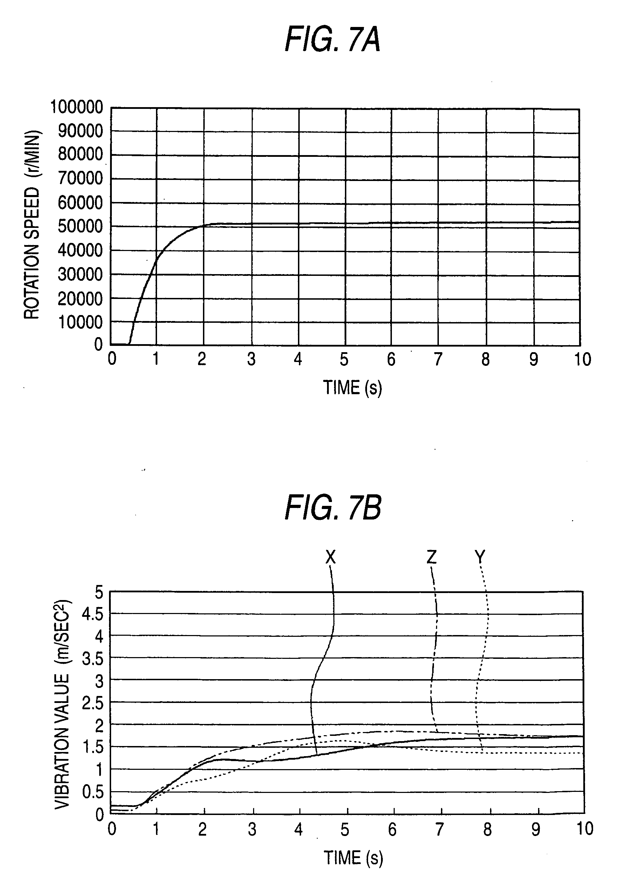

In these tests of Fig. 5B, as the damper member 60, a damper member was used which had the porosity of 60% and in which the fluorochemical grease was filled in the gaps among the wires 64. In the test of Fig. 5C, as the damper member 60, a damper member was used which had the porosity of 50% and in which fluorochemical grease was filled in the gaps among the wires 64. Further, like the related art, the rolling bearings 10a and 10b were lubricated by the engine oil.
Comparing the case of the porosity of 60% and the case of the porosity of 50%, it is apparent from Figs. 5B and 5C that the case of the porosity of 60% provides good vibration suppression property as compared with the case of the porosity of 50%. On the other hand, when the porosity is set larger than 60% (for example 70%, 80%), the strength of the damper member itself becomes low and sufficient rigidity to support the bearing can not be secured. Therefore, it is preferable to set the porosity of the damper member within the range between 50% and 70%. It is further preferable to set the porosity of the damper member within the range between 55% and 65%.
Further, Figs. 7A to 8B show the comparative example in which the vibration was measured as to the supercharger in a state of eliminating the damper member 60 under the same condition as the tests of Figs. 5A to 6B.

In Figs. 7A and 7B, in the comparative example, the maximum vibration value was about 1.5 to 2 m/sec² in each of the X, Y and Z directions when the rotation speed of the turbine shaft 41 was 50, 000 r/min. In contrast, when the damper member 60 is provided, as shown in Figs. 5A and 5B, although the vibration value was 2 m/sec² or less in each of the X, Y and Z directions like the comparative example, the vibration value was about 1 m/sec² in each of the Y and Z directions, in particular, and so the vibration was reduced as compared with the comparative example. Further, it is clear that the rising rate of the vibration value from the start was small as compared with the comparative example.

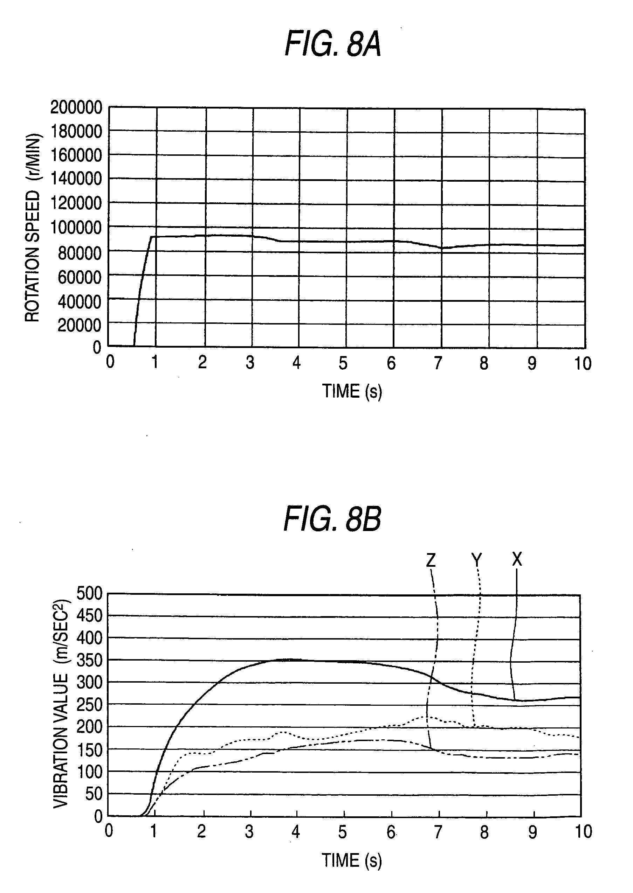

On the other hand, in the comparative example of Figs. 8A and 8B, when the rotation speed of the turbine shaft 41 increased to about 100,000 r/min., the vibration values increased largely and the maximum vibration value was 350 m/sec² in the X direction. In contrast, when the damper member 60 is provided, as shown in Figs. 6A and 6B, even if the turbine shaft 41 was rotated at a speed about 160, 000 r/min. exceeding 100, 000 r/min., the vibration value was only 9 m/sec² in the Y-directing at the maximum. In particular, the vibration value was 6 m/sec² or less in each of the X and Y directions. Thus, when the damper member 60 according to the embodiment is provided, the vibration can be suppressed effectively, and in particular it was proved that the final reaching rotation speed of the turbine shaft 41 can be increased.

The invention is not limited to the aforesaid embodiment and the design can be changed suitably. For example, the material and the outer diameter of the metal wire 64 forming the damper member 60 and the porosity etc. of the damper member 60 can be changed suitably. Further, in the aforesaid embodiment, although the damper member 60 is formed in a ring shape and fit into the outer periphery of the bearing supporting member 61, the damper member may be configured in an arc shape or a block shape divided in the peripheral direction. The sectional shape of the damper member 60 may be a circle or a polygon other than the quadrangle.

Further, the damper member 60 may be disposed between the outer rings of the rolling bearings 10a, 10b and the bearing supporting member 61. Alternatively, the damper member may be disposed between the outer rings of the bearings 10a, 10b and the housing 40 while eliminating the bearing supporting member 61.

## Claims

1. A supercharger comprising:
a turbine shaft to which a turbine is fixed;
a housing that houses the turbine shaft;
a bearing that rotatably supports the turbine shaft; and
a damper member that is formed by knitting a wire made of metal and disposed between the bearing and the housing for supporting the bearing.

2. The supercharger according to claim 1, wherein gaps are formed among the wires and lubricant is filled into the gaps.

3. The supercharger according to claim 1, wherein the housing includes a tank portion for reserving lubricant for the bearing and a supply unit for supplying the lubricant within the tank portion to the bearing.

4. The supercharger according to claim 1, wherein a porosity of the damper member is set within a range between 50% and 70%.
